# EUROPEAN PATENT APPLICATION

(11) **EP 1 100 020 A1**
(43) Date of publication of application: **16.05.2001**
(21) Application number: 00917328.7
(22) Date of filing: 18.04.2000
(51) Int. Cl.: G06F 12/16

(54) **PROCESSOR**

(30) Priority: 22.04.1999 JP 11468999
(71) Applicant: MATSUSHITA ELECTRIC INDUSTRIAL CO., LTD., Kadoma-shi, Osaka 571-8501 (JP)
(72) Inventor: SOMON, Junji, Kanazawa-shi, Ishikawa 920-0867 (JP); ARAMAKI, Yoshitaka, Yokosuka-shi, Kanagawa 239-0847 (JP)
(74) Representative: Grünecker, Kinkeldey, Stockmair & Schwanhäusser Anwaltssozietät
(86) International application number: JP0002497
(87) International publication number: WO0065455

(57) **Abstract**

A checksum operation program 301 of a data in an arbitrary memory space is stored in an instruction memory part 101. An initial loading controlling circuit 103 stores a data from an external device at the time of starting. A checksum operation circuit 107 performs a checksum operation of a data stored in the instruction memory part 101 by being loaded in conformity of the checksum operation program 301. And then, an operation part 104 detects a defect of the stored data on the basis of a result of its operation.

## Description

### Technical Field

The present invention relates to a processor, in particular, relates to a processor capable of loading an instruction code and a data code at the time of its starting.

### Background Art

There are known conventional processors described in Japanese laid-open patent publication Hei 8-320834, Japanese patent publication Hei 6-1445 and Japanese patent publication Hei 7-85226.

In recent years, owing to the remarkable improvement of processing speeds of processors, the cycle times of externally connected memories have become impossible to overtake the cycle times of the processors. Accordingly, there are rapidly increasing the number of processors that execute initial loading (i.e. the processing of expanding data into their built-in memories from external memories in which programs and the like are stored) at the time of their starting.

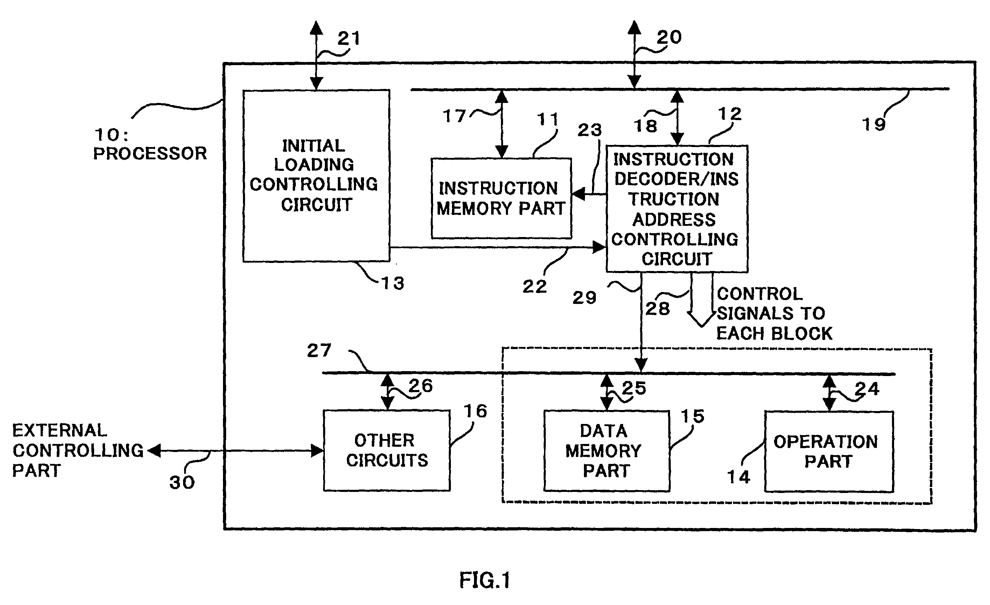

Fig. 1 is a block diagram showing the structure of a conventional processor that executes the initial loading. The processor 10 shown in Fig. 1 has a structure including an instruction memory part 11 that is the destination of the initial loading, an instruction decoder/instruction address controlling circuit 12, an initial loading controlling circuit 13, an operation part 14, a data memory part 15 and other circuits 16.

The instruction memory part 11 and the instruction decoder/instruction address controlling circuit 12 are connected with an instruction data bus 19 through connection paths 17 and 18, respectively. The instruction data bus 19 is connected with an external bus 20 connected with an external device (not shown).

An initial loading controlling signal path 21 from the external device is connected with the initial loading controlling circuit 13. An instruction signal 22 is outputted from the initial loading controlling circuit 13 to the instruction decoder/instruction address controlling circuit 12. An instruction signal 23 is outputted from the instruction decoder/instruction address controlling circuit 12 to the instruction memory part 11.

The operation part 14, the data memory part 15 and the other circuits 16 are connected with an operation data bus 27, which is in turn connected with the instruction decoder/instruction address controlling circuit 12, through connection paths 24, 25 and 26, respectively.

Control signals 28 to each block are outputted from the instruction decoder/instruction address controlling circuit 12 to the operation data bus 27. Furthermore, a data output path 29 from the instruction decoder/instruction address controlling circuit 12 is connected with the operation data bus 27. The other circuits 16 are connected with an external controlling part through an input-output path 30.

The operation of the processor 10 having the aforesaid structure at the time of its starting will now be described. The processor 10, to which an initial loading operation signal has been inputted through the path 21, enters into its initial loading mode by means of the processor 10 itself or an external operation (in case of slave mode). After this, the processor 10 makes the instruction memory part 11 store data from the external device through the external bus 20, the instruction data bus 19 and the connection path 17 in sequence under the control of the initial loading controlling circuit 13. After the operation of the initial loading, the processor 10 performs its operation in conformity with instruction codes like an ordinary processor.

There is another processor including means for checking whether data was normally loaded or not at the last step of the operation of the initial loading. The processor detects a defect by outputting the data to the external device through processes reverse to the storing processes of the data in sequence and by collating them by the external device.

However, because the conventional processors have structures that detect the defect only at the time of their starting, there is a problem that the detection of the defect becomes very difficult when there occurs a situation such as the contents stored in the instruction memory 11 are rewritten to unanticipated data during the operation of the processor 10.

### Disclosure of Invention

An object of the present invention is to provide a processor capable of identifying a defective position easily by making it possible to perform the checking of the state of maintaining a data loaded from an external device at the time of its starting by the processing of software at any time needed during the operation of the processor.

The object can be attained by providing an instruction code applicable to a checksum operation, a checksum operation circuit and a data path to a processor for performing the checking of the state of maintaining of the data loaded at the time of its starting by means of the processing of the software of itself by utilizing spare time during the operation of the processor. In other words, the object can be attained by storing the instruction code applicable to the checksum operation and performing the checksum operation in accordance with the stored instruction code on the data loaded from the external device at the time of its starting.

### Brief Description of Drawings

Fig. 1 is a block diagram showing the structure of a conventional processor;
Fig. 2 is a block diagram showing the structure of a processor according to embodiment 1 of the present invention;
Fig. 3 is a block diagram showing the structure of the checksum operation circuit of the aforesaid processor according to the embodiment 1;
Fig. 4 is a drawing of an example of a checksum operation program used by the aforesaid processor according to the embodiment 1;
Fig. 5 is a block diagram showing the structure of a processor according to embodiment 2 of the present invention;
Fig. 6 is a drawing of an example of a checksum operation program used by the aforesaid processor according to the embodiment 2;
Fig. 7 is a block diagram showing the structure of a processor according to embodiment 3 of the present invention;
Fig. 8 is a block diagram showing the structure of the instruction decoder/instruction address controlling circuit of a processor according to embodiment 4 of the present invention;
Fig. 9 is a drawing of an example of a checksum operation program used by the aforesaid processor according to the embodiment 4;
Fig. 10 is a drawing of an example of identifying a defective position by means of two-dimensional checksum operation by the aforesaid processor according to the embodiment 4;
Fig. 11 is a structural drawing showing a part of an initial loading data map in a processor according to embodiment 5 of the present invention;
Fig. 12 is a drawing of an example of a checksum operation program used by the aforesaid processor according to the embodiment 5;
Fig. 13 is a block diagram showing the structure of a mobile station apparatus;
Fig. 14 is a block diagram showing a circuit structure in the case where one of the aforesaid processors according to the embodiments 1-5 is applied to a mobile station apparatus or a base station apparatus; and
Fig. 15 is a block diagram showing the base station apparatus.

### Best Mode for Carrying Out the Invention

Hereafter, the best modes for carrying out the present invention will be described in detail with reference to the drawings.

### (EMBODIMENT 1)

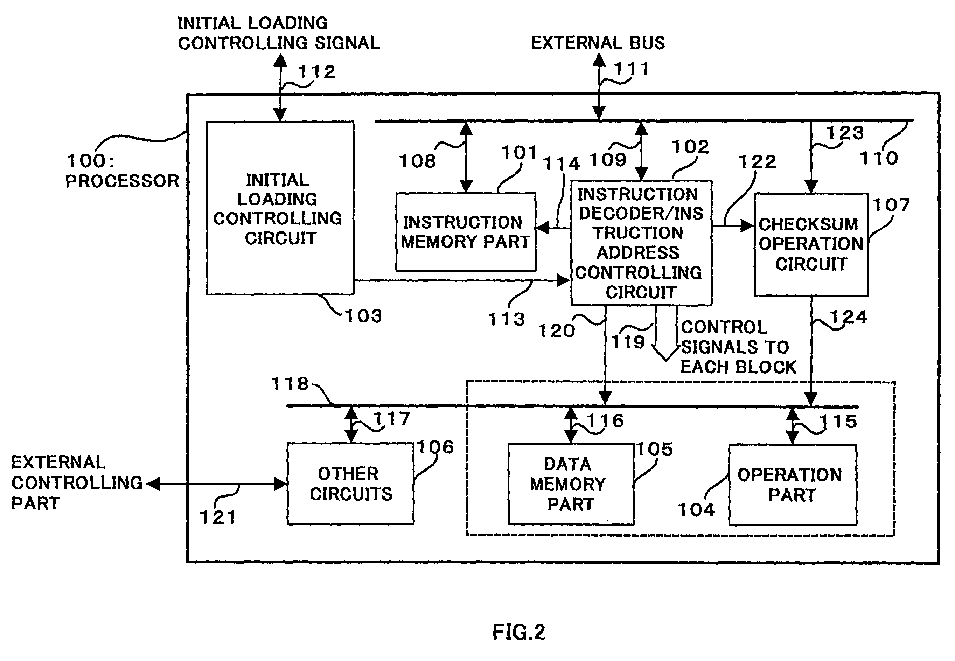

Fig. 2 is a block diagram showing the structure of a processor according to the embodiment 1 of the present invention.

The processor 100 shown in Fig. 2 has a structure including an instruction memory part 101 that is the destination of the initial loading, an instruction decoder/instruction address controlling circuit 102, an initial loading controlling circuit 103, an operation part 104, a data memory part 105, other circuits 106 and a checksum operation circuit 107. Incidentally, there may be a case where the instruction decoder/instruction address controlling circuit 102 is separately expressed as "instruction decoder 102" or "instruction address controlling circuit 102" hereafter. Moreover, the processor 100 is applied as, for example, a digital signal processor (DSP).

The instruction memory part 101 and the instruction decoder/instruction address controlling circuit 102 are connected with an instruction data bus 110 through connection paths 108 and 109, respectively. The instruction data bus 110 is connected with an external bus 111 connected with an external device (not shown).

An initial loading controlling signal path 112 from the external device is connected with the initial loading controlling circuit 103. An instruction signal 113 is outputted from the initial loading controlling circuit 103 to the instruction decoder/instruction address controlling circuit 102. An instruction signal 114 is outputted from the instruction decoder/instruction address controlling circuit 102 to the instruction memory part 101.

The operation part 104, the data memory part 105 and the other circuits 106 are connected with an operation data bus 118, which is in turn connected with the instruction decoder/instruction address controlling circuit 102, through connection paths 115, 116 and 117, respectively.

Control signals 119 to each block are outputted from the instruction decoder/instruction address controlling circuit 102 to the operation data bus 118. Furthermore, a data output path 120 from the instruction decoder 102 is connected with the operation data bus 118. The other circuits 106 are connected with an external controlling part through an input-output path 121.

The checksum operation circuit 107 is connected with the instruction decoder/instruction address controlling circuit 102 with a connection path 122, and is connected with the instruction data bus 110 with the connection path 123, and further is connected with the operation data bus 118 with a connection path 124.

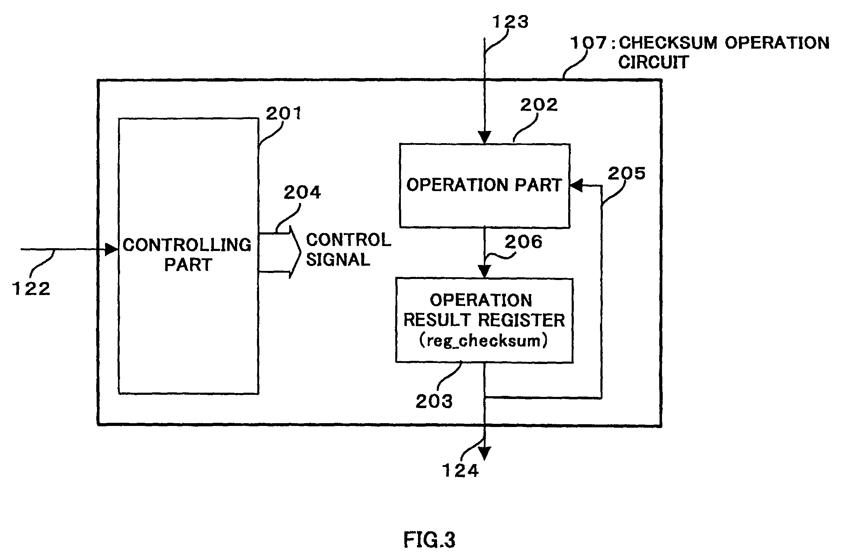

The checksum operation circuit 107 has a structure including a controlling part 201, an operation part 202 and an operation result register 203 as shown in Fig. 3. In the checksum operation circuit 107, the control of the operation part 202 and the operation result register 203 is performed in conformity with a control signal 204 from the controlling part 201.

The features of the embodiment 1 are the addition of a function to be described later to the instruction decoder/instruction address controlling circuit 102 in addition to its conventional functions and the addition of the checksum operation circuit 107.

In such a structure, the processor 100, to which an initial loading operation signal has been inputted through the path 112 at the time of its starting, enters into its initial loading mode by means of the processor 100 itself or an external operation (in case of slave mode). After this, the processor 100 makes the instruction memory part 101 store data from the external device through the external bus 111, the instruction data bus 110 and the connection path 108 in sequence under the control of the initial loading controlling circuit 103 (namely, the processor 100 downloads the data).

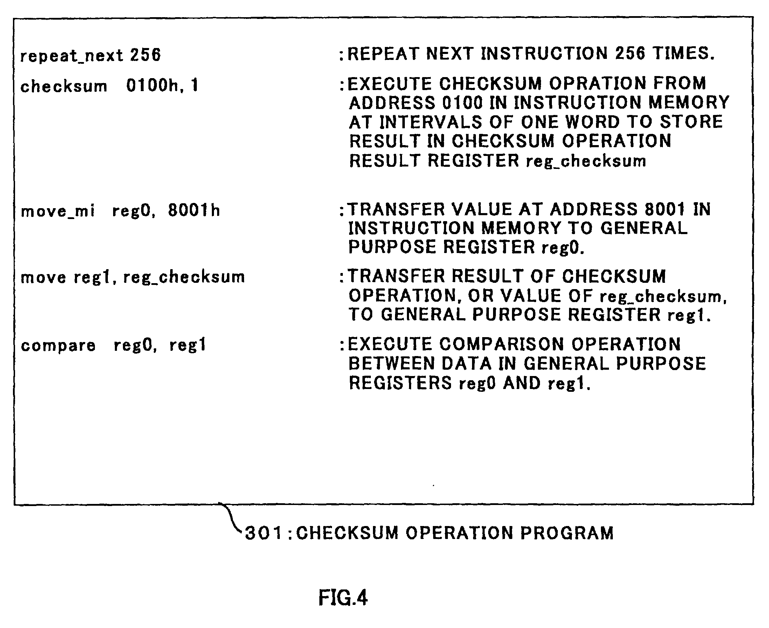

Furthermore, a checksum operation program 301 shown in Fig. 4 as an example, is previously stored in the instruction memory part 101. The checksum operation program 301 is to perform a checksum operation for detecting a defect of data stored in the instruction memory part 101 from the outside. An instruction in conformity with the program 301 is informed to the checksum operation circuit 107 through the connection path 108, the instruction data bus 110 and the connection path 123, or the instruction decoder/instruction address controlling circuit 102. Thereby, checksum operation processing is executed by the checksum operation circuit 107.

The contents of the processing are to execute the checksum operation of all the data from an address 0100h to an address 01ffh of the instruction memory part 101, and to execute the comparison operation between the result of the checksum operation and the data at an address 8001h in the instruction memory part 101 which is the expected value of the result. Hereafter, the operation in the checksum operation processing will be described along the example program 301.

The instruction decoder 102 sets its repeat counter to repeat the next instruction 256 times in conformity with the "repeat_next" instruction at the first line, and outputs an control instruction to the instruction address controlling circuit 102.

The "checksum" instruction at the second line is a special instruction to be used in the combination with the instruction "repeat_next". The processing contents of the "checksum" instruction differ at the first time of the repeating, the last time thereof and the times thereof after the second time to the previous time to the last time, respectively.

In the operation at the first time, a current instruction pointer is pushed onto the stack, and the address 0100h ("h" is an abbreviation of "hex" indicating hexadecimal) is set at an instruction pointer, and further the updated increment value of the instruction pointer is set to be one in the instruction decoder/instruction address controlling circuit 102. In addition, the checksum operation circuit 107 clears the operation result register (reg_checksum) 203 to be zero. After that, the same operations as those at the times after the second time are executed.

In the operations at the times after the second time to the previous time to the last time, the data at the addresses in the instruction memory part 101 indicated by the instruction pointer are supplied to the checksum operation circuit 107 through the connection path 108, the instruction data bus 110 and the connection path 123. The instruction pointer is updated by the increment value set at the first time.

In the checksum operation circuit 107, an arbitrary checksum operation between the data supplied from the connection path 123 and the data 205 in the operation result register 203 is performed, and the result 206 of the checksum operation is outputted to the operation result register 203 to be stored therein.

At the last time of the repetition, the data in the instruction memory part 101 at the address indicated by the instruction pointer is supplied to the checksum operation circuit 107 through the connection path 108, the instruction data bus 110 and the connection path 123. Thereby, the instruction pointer pops the pointer value pushed at the first time, and transfers to return from the repetition processing.

In the checksum operation circuit 107, an arbitrary checksum operation between the data supplied from the connection path 123 and the data 205 in the operation result register 203 is likewise performed, and the result 206 of the operation is outputted to the operation result register 203 to be stored therein.

Consequently, the result of the operation corresponds to the result of the checksum operations of all the data from the address 0100h to the address 01ffh in the instruction memory part 101.

By the instruction "move_mi" at the third line of the checksum operation program 301, the contents at the address 8001h in the instruction memory part 101 are inputted into the general purpose register reg0 in the operation part 104, and then the contents are inputted into the instruction decoder/instruction address controlling circuit 102 through the connection path 108, the instruction data bus 110 and the connection path 109. After that, the contents are stored in the general purpose register in the operation part 104 through the data output path 120, the operation data bus 118 and the connection path 115.

At this time also, the instruction decoder/instruction address controlling circuit 102 performs the push/pop operations of the current instruction pointer like the checksum instruction, and calls out the desired data at the address 8001h by operating the instruction pointer.

At the line 4, the contents in the operation result register 203 in the checksum operation circuit 107 are transferred to the general purpose register reg1 in the operation part 104.

At last, at the line 5, in the operation part 104, the checking of the state of maintaining the data loaded at the time of starting is performed by executing the comparison operation between the expected value of the result of the checksum operation in the general purpose register reg0 and the result of the operation in the general purpose register reg1.

As mentioned above, because to the processor of the embodiment 1 is structured so as to include the instruction memory part 101 storing therein the checksum operation program 301 for data in an arbitrary memory space, the initial loading controlling circuit 103 for loading data from the external device into the instruction memory part 101 at the time of starting, the checksum operation circuit 107 for performing the checksum operation of the data stored in the instruction memory part 101 loaded in conformity with the checksum operation program 301, and the operation part 104 for detecting a defect of stored data on the basis of the result of the checksum operation, the checking of the state of maintaining the data loaded at the time of starting can be performed at any time when it is needed by means of software processing by executing instruction codes capable of performing the checksum operation.

### (EMBODIMENT 2)

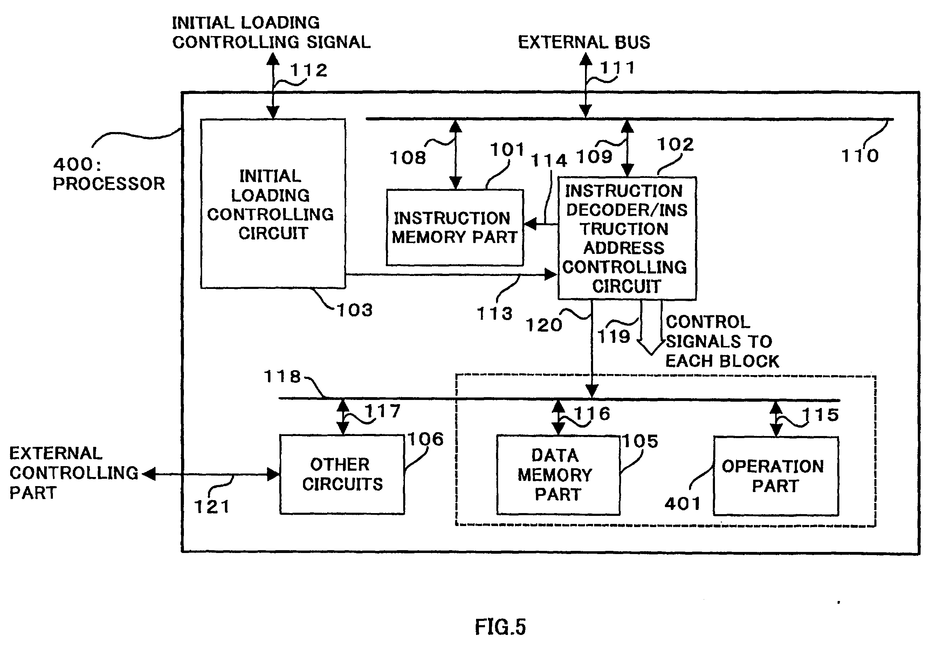

Fig. 5 is a block diagram showing the structure of a processor according to the embodiment 2 of the present invention. Incidentally, the same components in Fig. 5 as those of the embodiment 1 shown in Fig. 2 are designated by the same reference numerals as those in Fig. 2, and their detailed descriptions are omitted.

The processor 400 of the embodiment 2 shown in Fig. 5 differs from the embodiment 1 in the point that it does not perform its checksum operation by means of the newly provided checksum operation circuit 107 like in the embodiment 1, but it has a function of making its existing operation part 401 perform the checksum operation.

Furthermore, when the embodiment 2 is compared with the embodiment 1, the embodiment 2 has a procession problem when the bit length of an instruction data and the bit length of an operation data are different from each other, especially when the bit length of the instruction data is larger than that of the operation data.

Accordingly, in the embodiment 2, the bit lengths of the instruction data are made to be 32 bits, and the bit lengths of the operation data are made to be 16 bits, and further the lengths of the operation data buses are made to be 16 bits. The operation part 401 has a general purpose register having twice precision length and the operation part 401 is capable of performing operations in twice precision.

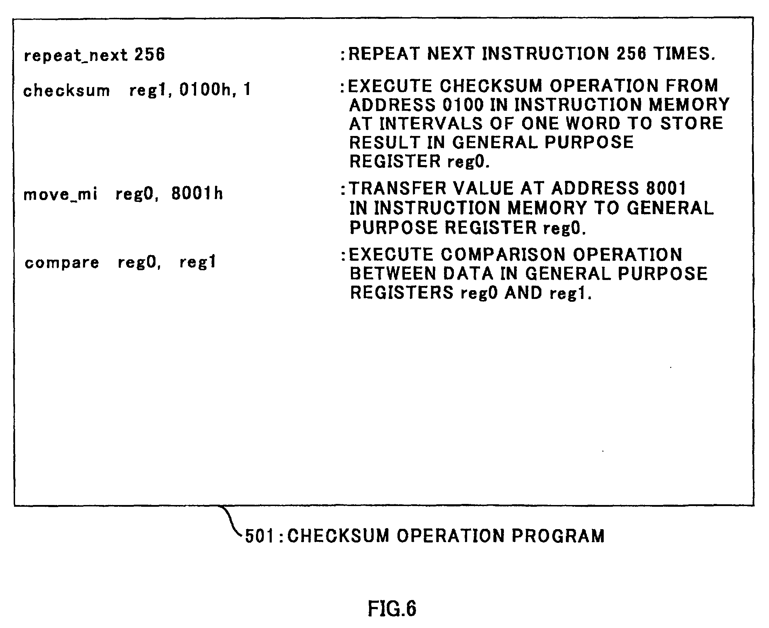

Fig. 6 is a drawing of an example of a checksum operation program 501 for the processor 400 in case of performing a checksum operation processing in the embodiment 2.

The contents of the processing are the same as those in the embodiment 1. That is, the checksum operation of all the data from the address 0100h to the address 01ffh of the instruction memory part 101 is executed, and then the comparison operation between the result of the checksum operation and the data at the address 8001h in the instruction memory part 101, which is the expected value of the result of the checksum operation, is executed. Hereafter, the operation in the checksum operation processing will be described along the program 501.

The instruction decoder 102 sets its repeat counter to repeat the next instruction 256 times in conformity with the "repeat_next" instruction at the first line, and outputs an control instruction to the instruction address controlling circuit 102.

The "checksum" instruction at the second line is a special instruction to be used in the combination with the instruction "repeat_next". The processing contents of the "checksum" instruction differ at the first time of the repeating, the last time thereof and the times thereof after the second time to the previous time to the last time, respectively.

In the operation at the first time, a current instruction pointer is pushed onto the stack, and the address 0100h is set at an instruction pointer, and further the updated increment value of the instruction pointer is set to be one in the instruction decoder/instruction address controlling circuit 102. In addition, the general purpose reg1 is cleared to be zero in the operation part 401. After that, the same operations as those at the times after the second time are executed.

In the operations at the times of the repetition after the second time to the previous time to the last time, the data at the addresses in the instruction memory part 101 indicated by the instruction pointer are supplied to the instruction decoder/instruction address controlling circuit 102 through the connection path 108, the instruction data bus 110 and the connection path 109. After that, the data are supplied to the operation part 401 through the data output path 120, the operation data bus 118 and the connection path 115.

In this case, because the bit length of the instruction data, 32 bits, are larger than that of the operation data, 16 bits, the data output path 120, the operation data bus 118 and the connection path 115 supply the 32 bit data by transferring the data two times, at each of which 16 bit data, a half of the 32 bit data, is transferred. The instruction pointer is updated by the increment value set at the first time. In the operation part 401, an arbitrary checksum operation between the data supplied from the connection path 115 and the data in the general purpose register reg1 is performed, and the result of the checksum operation is outputted to the general purpose register reg0 to be stored therein.

At the last time of the repetition, the data in the instruction memory part 101 at the address indicated by the instruction pointer is likewise supplied to the instruction decoder/instruction address controlling circuit 102 through the connection path 108, the instruction data bus 110 and the connection path 109. After that, the data is supplied to the operation part 401 through the data output path 120, the operation data bus 118 and the connection path 115. The instruction pointer pops the pointer value pushed at the first time, and transfers to return from the repetition processing.

In the operation part 401, an arbitrary checksum operation between the data supplied from the connection path 115 and the data in the general purpose register reg1 is likewise performed, and the result of the checksum operation is stored in the general purpose register reg1.

By the instruction "move_mi" at the third line of the checksum operation program 501, the contents at the address 8001h in the instruction memory part 101 are inputted into the general purpose register reg0 in the operation part 401, and then the contents are inputted into the instruction decoder/instruction address controlling circuit 102 through the connection path 108, the instruction data bus 110 and the connection path 109. After that, the contents are stored in the general purpose register in the operation part 401 through the data output path 120, the operation data bus 118 and the connection path 115.

At this time also, the data output path 120, the operation data bus 118 and the connection path 115 supply the 32 bit data by transferring the data two times, at each of which 16 bit data, a half of the 32 bit data, is transferred.

The instruction decoder/instruction address controlling circuit 102 performs the push/pop operations of the current instruction pointer like the checksum instruction, and operates the instruction pointer to call out the desired data at the address 8001h.

At last, at the line 4, the checking of the state of maintaining the data loaded at the time of starting is performed by executing the comparison operation between the expected value of the result of the checksum operation in the general purpose register reg0 and the result of the operation in the general purpose register reg1.

As mentioned above, because the processor of the embodiment 2 is provided with a data path so as to utilize the existing operation part 401 as means for realizing the data checksum operation processing, the effects similar to those of the embodiment 1 can be obtained with a structure in which additional hardware is little.

### (EMBODIMENT 3)

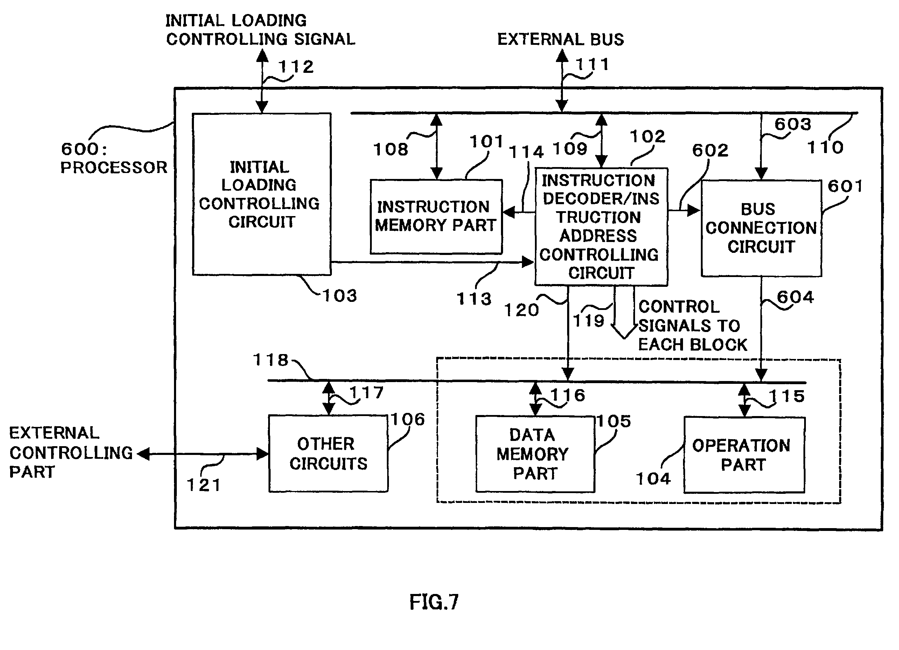

Fig. 7 is a block diagram showing the structure of a processor according to the embodiment 3 of the present invention. Incidentally, the same components in Fig. 7 as those of the embodiment 2 shown in Fig. 5 are designated by the same reference numerals as those in Fig. 5, and their detailed descriptions are omitted.

The processor 600 of the embodiment 3 shown in Fig. 7 differs from that of the embodiment 2 in the equipment of a bus connection circuit 601 for connecting the instruction decoder/instruction address controlling circuit 102, the instruction data bus 110 and the operation data bus 118.

That is, the bus connection circuit 601 is connected with the instruction decoder/instruction address controlling circuit 102 by means of a path 602, and the circuit 601 is connected with the instruction data bus 110 by means of a path 603, and further the circuit 601 is connected with the operation data bus 118 by means of a path 604.

Moreover, the processor 600 differs from that of the embodiment 2 in the alteration of a path for supplying the data in the instruction memory part 101 to the operation part 401 from the route of the connection path 108, the instruction data bus 110, the connection path 109, the data output path 120 though the instruction decoder/instruction address controlling circuit 102, the operation data bus 118, and the connection path 115 to the route of the connection path 108, the instruction data bus 110, the path 603, the path 604 through the bus connection circuit 601, the operation data bus 118 and the connection path 115.

Moreover, the bus connection circuit 601 has a function of supplying a 32 bit length data at the path 603 to the path 604 capable of transferring 16 bit length data by dividing the 32 bit length data into 16 bit length data for transforming them two times under the instruction of the instruction decoder 102 through the path 602. The other operations of the processor 600 are the same as those of the embodiment 2.

As mentioned above, in the processor according to the embodiment 3, if the timing of using the instruction data bus 110 and the timing of using the operation data bus 118 are different from each other, because the data to be transferred from the instruction memory part 101 to the operation part 401 does not receive the latch processing of the instruction decoder 102, the connection of the instruction data bus 110 with the operation data bus 118 is performed at the peculiar timing set by the bus connection circuit 601. Thereby, the degree of freedom of setting the timing can be increased. Furthermore, because delay by the latch part in the instruction decoder 102 becomes unnecessary to be added, the delay necessary for transmitting data can be decreased. Consequently, the processor according to the embodiment 3 can scheme the simplification of the function of the instruction decoder/instruction address controlling circuit 102 and timing control.

### (EMBODIMENT 4)

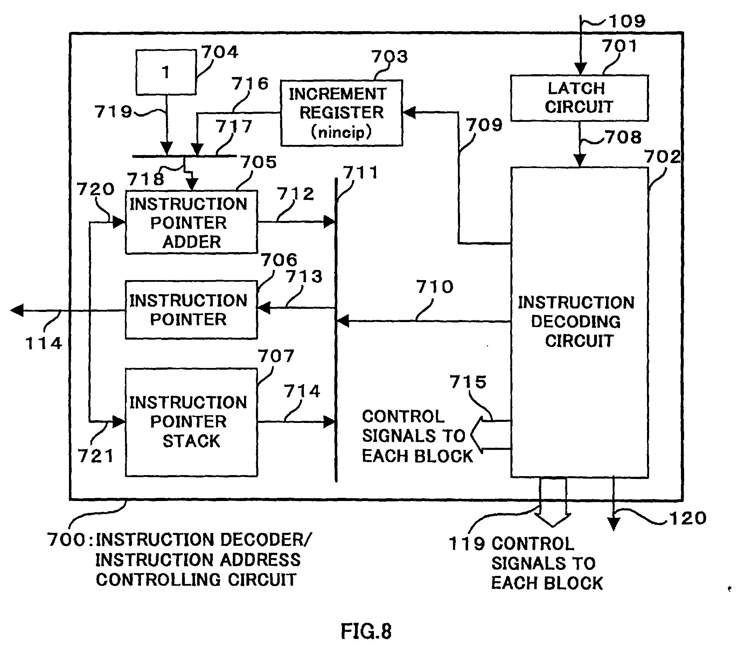

Fig. 8 is a block diagram showing the structure of the instruction decoder/instruction address controlling circuit in a processor according to the embodiment 4 of the present invention. Incidentally, the instruction decoder/instruction address controlling circuit 700 shown in Fig. 8 is provided in place of the instruction decoder/instruction address controlling circuit 102 of the processor 100 described concerning the embodiment 1.

The instruction decoder/instruction address controlling circuit 700 shown in Fig. 8 is structured to include a latch circuit 701, an instruction decoding circuit (represented as an instruction decoder in the embodiment 1) 702, an increment register 703, a fixed increment register 704, an instruction pointer adder 705, an instruction pointer 706, and an instruction pointer stack 707.

The latch circuit 701 connected with the instruction data bus 110 through the connection path 109 is connected with the instruction decoding circuit 702 with a path 708.

The instruction decoding circuit 702 is connected with the data output path 120, and the circuit 702 is connected with the increment register 703 with a path 709, and further the circuit 702 is connected with the instruction pointer adder 705, the instruction pointer 706 and the instruction pointer stack 707 with each path 712, 713 and 714 connected with a connection bus 711 of a path 710, respectively. Moreover, the instruction decoding circuit 702 outputs control signals 715 to each internal block together with the control signals 119 to each external block.

The increment register 703 is connected with the instruction pointer adder 705 with a path 718 connected with a connection bus 717 of a path 716. The fixed increment register 704 is connected with the instruction pointer adder 705 with the path 718 connected with the connection bus 717 of a path 719.

The instruction pointer 706 is connected with the instruction memory part 101 with the path 114, and is connected with the instruction pointer adder 705 with a path 720, and further is connected with the instruction pointer stack 707 with a path 721.

The instruction decoder/instruction address controlling circuit 700 differs from that in the embodiment 1 in the equipment of the increment register 703 and the instruction pointer adder 705.

In an ordinary processor, a part corresponding to the increment register is fixed to a value of "1" as shown by the fixed increment register 704 except for the case of a variable length instruction, and an adder is enough only if it can perform a +1 operation. As its operation, an incremented value is ordinary "1", and therefore a value in the increment register is used only in case of an instruction pointer at the time of the checksum operation.

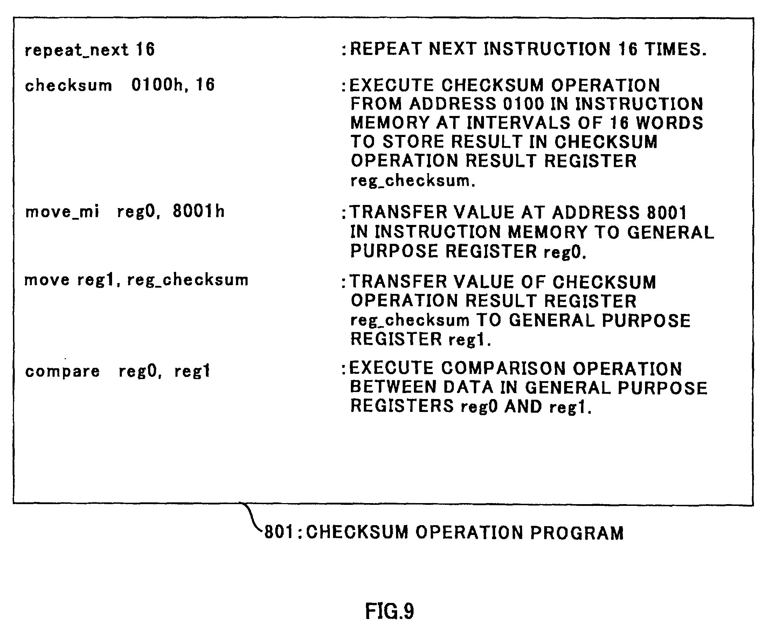

Fig. 9 shows an example of a checksum operation program 801 for the processor in case of performing a checksum operation of the embodiment 4. In the program 801, the checksum operation is performed at intervals of 16 words, namely the checksum operation for 16 words at addresses from 0100h to 01f0h among addresses having low-order four bits of b'0000'.

Because the whole operation of the embodiment 4 is the same as that of the embodiment 1, the description concerning the operation of the embodiment 4 will be given only to that of the instruction address controlling part. At the first time of repetitions in conformity with the checksum instruction in the second line, the address 0100h is set in the instruction pointer 706 from the instruction decoding circuit 702 through the route of paths 710, 711 and 713. Moreover, a numeral value "16" is set in the increment register 703 from the instruction decoding circuit 702 through the route of the path 709. The increment value of the instruction decoder/instruction address controlling circuit 700 is changed to the setting of using the values in the increment register 703 from the setting of using the value "1" in the fixed increment register 704 at an ordinary time. And then, the value "0100h" is outputted to the instruction memory part 101 as an instruction pointer value through the connection path 114.

Furthermore, a value obtained through the path 720 and an increment register value obtained through the paths 716, 717 and 718 are added by the instruction pointer adder 705 to update the instruction pointer 706 through the paths 712, 711 and 713.

The update of the instruction pointer 706 is likewise performed from the second time downward, and updated instruction pointer values are outputted to the instruction memory part 101.

At the last time, the aforesaid update is not performed, and the current instruction pointer value is popped from the instruction pointer stack 707 through a route of the path 714, the bus 711 and the path 713. In addition, the increment value is also returned to the ordinal value "1".

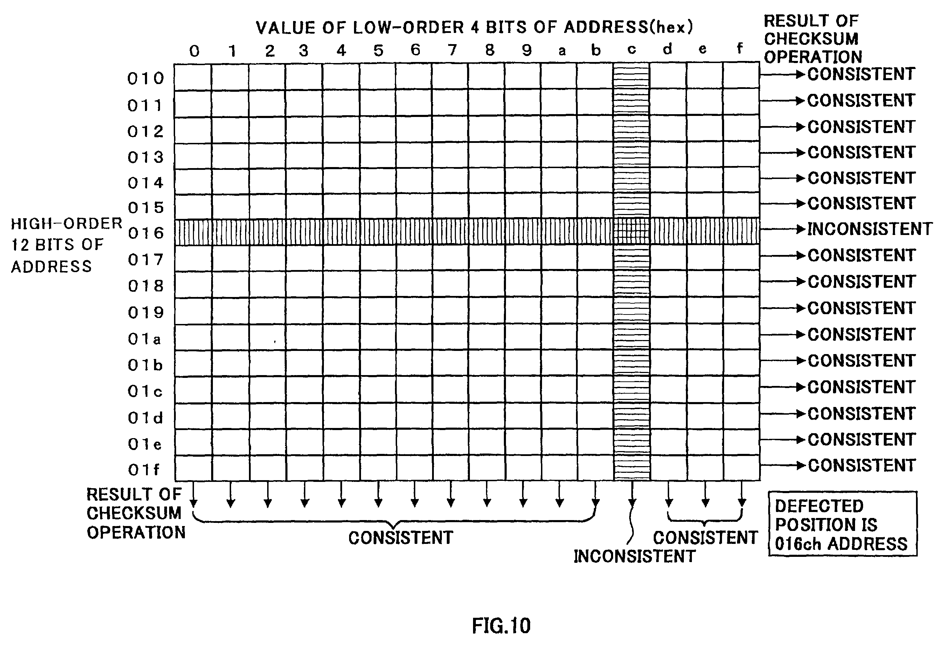

By means of the operations like this, a space to be an object of a checksum operation can be not only a continuous address space but also address spaces at a designated interval.
Thereby, because two dimensional checksum operation in the directions of rows and columns of an address space is enabled as shown in Fig. 10, the identification of a defective position can be made to be easy.

As mentioned above, according to the instruction decoder/instruction address controlling circuit of the processor of the embodiment 4, because methods for designating memory spaces where checksum operations are performed are made to be various and two dimensional checksum operations in directions of rows and columns in address spaces are enabled, the identification of a defective position can be made to be easy.

### (EMBODIMENT 5)

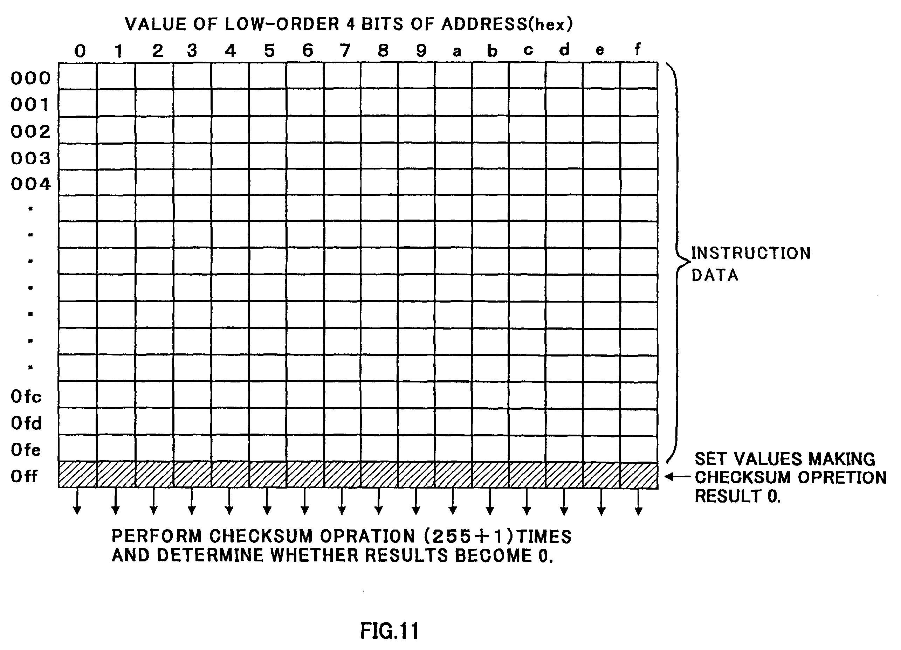

Fig. 11 is a structural drawing showing a part of an initial loading data map in a processor according to the embodiment 5 of the present invention.

The embodiment 5 differs from the embodiment 1 in the map structure of initial loading data modified previously to perform checksum operations easily.

Fig. 11 shows a structure for performing checksum operations at an interval of 16 words by dividing 256 × 16 words into 16 blocks. Instruction data are placed on addresses from 0000h to 0fefh, and values making operation results of respective 16 blocks where checksum operations are performed be a unique value (0 in this example) are set at addresses 0ff0h to 0fffh.

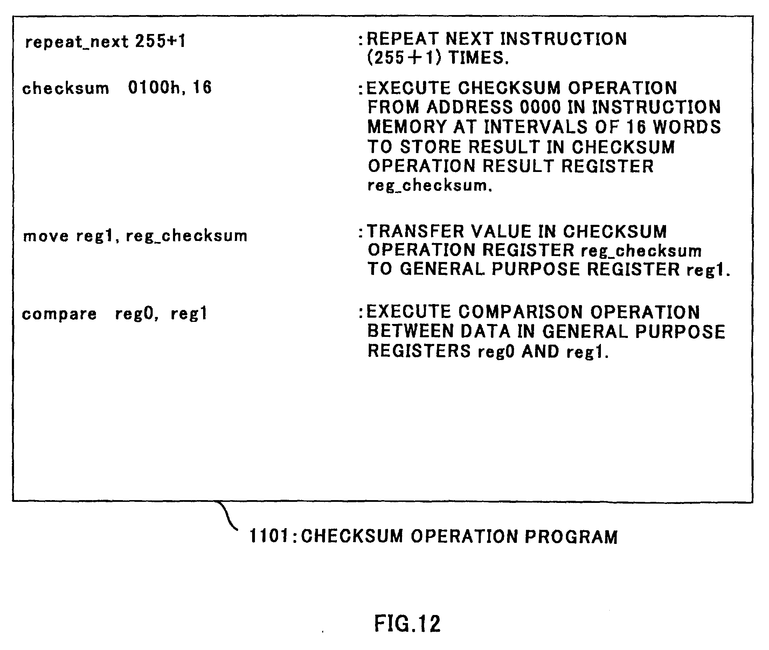

Thereby, as shown in the checksum operation program 1101 in Fig. 12, only performing the checksum operation instruction one more time simplifies the checksum operation processing only to judge whether the values in the operation result register are 0 or not.

That is, it is unnecessary to prepare the "move_mi" instruction in the embodiment 1, and the checksum operation processing can effectively be performed.

As mentioned above, according to the processor of the embodiment 5, in its method for detection, by embedding a checksum operation code previously into data to be loaded and performing the checksum operation one more time, the detection of a defective position is made to be easy, and no additional instruction for detection can be made to be needed.

Furthermore, by connecting the checksum operation circuit 107 directly to the instruction data bus 110 as means for realizing data checksum operation processing, it becomes possible to realize the detection of a defection by designing timing simply without using the route including the instruction decoder 102 and the operation data bus 118.

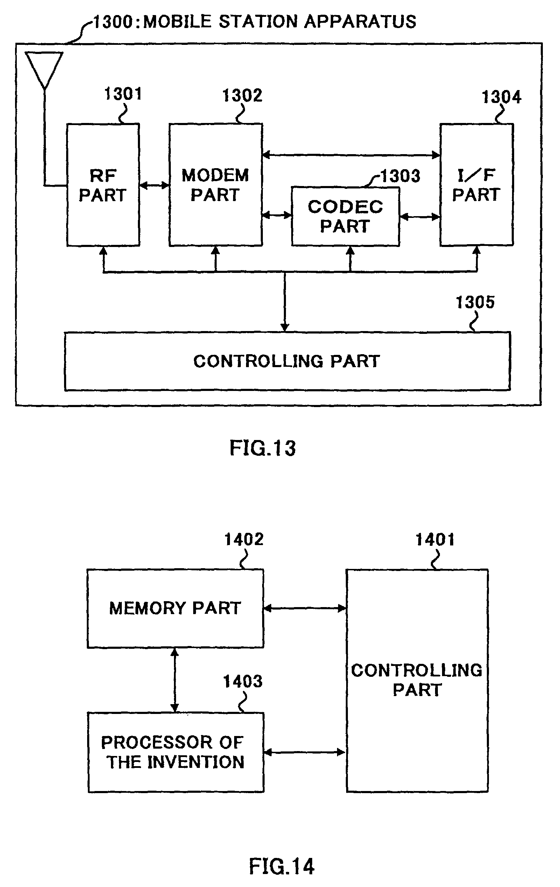

The aforesaid processors of the embodiments 1-5 can be applied to a mobile station apparatus (or communication terminal) or a base station apparatus in a movable body communication system as will be described next. As shown in Fig. 13, a mobile station apparatus 1300 is generally structured to include an RF part (radio transmission part) 1301, a modem part 1302, a codec part 1303, an I/F (interface) part 1304 and a controlling part 1305.

Among these components, the aforesaid processors can mainly be applied to the codec part 1303, which is ordinary constructed to be a digital signal processor (DSP) itself, the controlling part (CPU) 1305, a processor (DSP, CPU) used in the modem part 1302, and a processor (DSP, CPU) used in the I/F part 1304.

In case of applying the processors like this, as shown in Fig. 14, a controlling part 1401, a memory part 1402 and a processor 1403 should be connected so that each of them are connected with each other. But, because the codec part 1303 itself is generally a DSP as mentioned above, the mobil station apparatus 1300 should be structured so that the controlling part 1305 shown in Fig. 13 corresponds to the controlling part 1401 shown in Fig. 14.

Moreover, two or three of the three components, the codec part 1303, the controlling part 1305 and the modem part 1302, to which the processors can be applied as mentioned above, may be integrated to one chip processor.

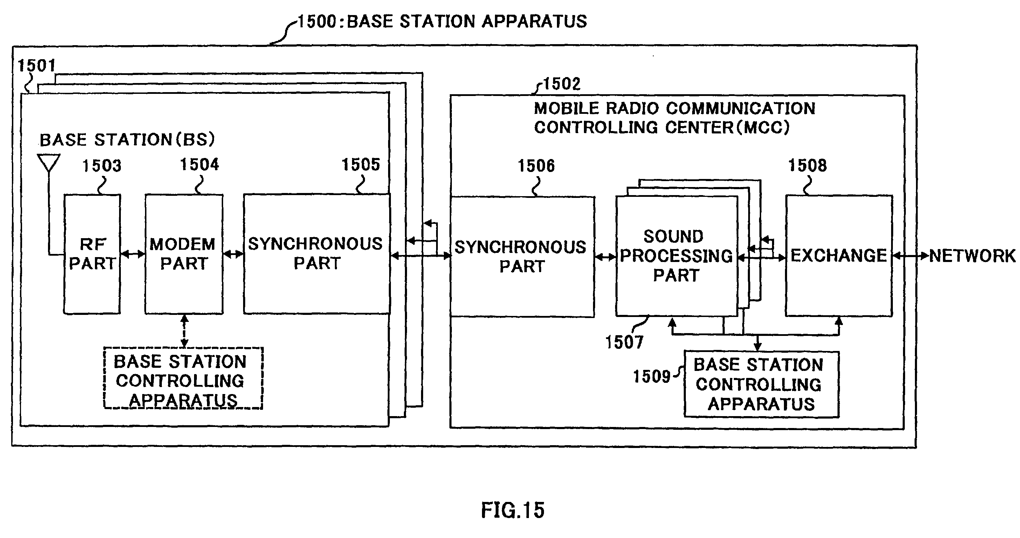

Next, as shown in Fig. 15, a base station apparatus 1500 is generally equipped with a base station (BS) 1501 and a mobile radio communication controlling center (MCC) 1502. The BS 1501 is equipped with an RF part 1503, a modem part 1504 and a synchronous part 1505. The MCC 1502 is equipped with a synchronous part 1506, a sound processing part 1507, an exchange 1508 and a base station controlling apparatus 1509.

Among these components, the aforesaid processors can mainly be applied to a sound codec part in the sound processing part 1507 and a processor (DSP, CPU) in the modem part 1504.

As described above, according to the present invention, the checking of the state of maintaining the data loaded from the external device at the time of starting can be made to be capable of being easily performed with software processing at any time when it is needed during the operation thereof. Consequently, the identification of a defected part can be performed easily.
1. A processor of a first aspect of the present invention has a structure including memory means for storing a checksum operation instruction of a data in an arbitrary memory space, controlling means for loading a data from an external device into the memory means at the time of starting, checksum operation means for performing a checksum operation of the data stored at the loading in conformity with the checksum operation instruction, and operation means for detecting a defect of the stored data on the basis of a result of the checksum operation.
   According to the structure, by executing an instruction code capable of performing the checksum operation, the checking of the state of maintaining of the data loaded in the memory means at the time of starting can be performed in conformity of software processing at any time when it is needed.
2. A processor of a second aspect of the present invention has a structure wherein the memory means is instruction memory means for storing an instruction code.
   According to the structure, by executing an instruction code capable of performing the checksum operation, the checking of the state of maintaining of the data loaded in the instruction memory means at the time of starting can be performed in conformity of software processing at any time when it is needed.
3. A processor of a third aspect of the present invention has a structure for designating an arbitrary memory space, in which a checksum operation is performed, by designating the number of words of an object of the checksum operation in conformity with an instruction code directly.
   According to the structure, because a two-dimensional checksum operation in a row direction and in a column direction in an address space is enabled, the identification of a defected position can be made to be easy.
4. A processor of a fourth aspect of the present invention has a structure for designating an arbitrary memory space, in which a checksum operation is performed, by designating the number of words of an object of the checksum operation by means of an arbitrary register indirectly.
   According to the structure, because a two-dimensional checksum operation in a row direction and in a column direction in an address space is enabled, the identification of a defected position can be made to be easy.
5. A processor of a fifth aspect of the present invention has a structure for designating an arbitrary memory space, in which a checksum operation is performed, by designating the first address of an object space of the checksum operation by means of an instruction code directly.
   According to the structure, because a two-dimensional checksum operation in a row direction and in a column direction in an address space is enabled, the identification of a defected position can be made to be easy.
6. A processor of a sixth aspect of the present invention has a structure for designating an arbitrary memory space, in which a checksum operation is performed, by designating the first address of an object space of the checksum operation by means of an arbitrary register indirectly.
   According to the structure, because a two-dimensional checksum operation in a row direction and in a column direction in an address space is enabled, the identification of a defected position can be made to be easy.
7. A processor of a seventh aspect of the present invention has a structure for designating an arbitrary memory space, in which a checksum operation is performed, by designating an address interval of an object space of the checksum operation by means of an instruction code directly.
   According to the structure, because a two-dimensional checksum operation in a row direction and in a column direction in an address space is enabled, the identification of a defected position can be made to be easy.
8. A processor of an eighth aspect of the present invention has a structure for designating an arbitrary memory space, in which a checksum operation is performed, by designating an address interval of an object space of the checksum operation by means of an arbitrary register indirectly.
   According to the structure, because a two-dimensional checksum operation in a row direction and in a column direction in an address space is enabled, the identification of a defected position can be made to be easy.
9. A processor of a ninth aspect of the present invention has a structure wherein checksum operation means is connected with an instruction data bus connected with instruction memory means.
   According to the structure, by executing an instruction code capable of performing the checksum operation, the checking of the state of maintaining of the data loaded in the instruction memory means at the time of starting can be performed in conformity of software processing at any time when it is needed.
10. A processor of a tenth aspect of the present invention has a structure wherein checksum operation means is connected with instruction memory means, an instruction data bus connected with instruction decoding means for supplying an instruction signal to the instruction memory means, and the instruction decoding means.
   According to the structure, by executing an instruction code capable of performing the checksum operation, the checking of the state of maintaining of the data loaded in the instruction memory means at the time of starting can be performed in conformity of software processing at any time when it is needed.
11. A processor of an eleventh aspect of the present invention has a structure wherein operation means performs an checksum operation in place of checksum operation means by taking in an instruction code and data in instruction memory means from an operation data bus through an instruction data bus and instruction decoding means.
   According to the structure, because the utilization of the existing operation means is realized by providing a data path, the detection of a defect can be performed in the structure having little additional hardware.
12. A processor of a twelfth aspect of the present invention has a structure wherein checksum operation means is connected with instruction memory means, an instruction data bus and an operation data bus, both of which are connected with instruction decoding means for supplying an instruction signal to the instruction memory means, and the instruction decoding means.
   According to the structure, by executing an instruction code capable of performing the checksum operation, the checking of the state of maintaining of the data loaded in the instruction memory means at the time of starting can be performed in conformity of software processing at any time when it is needed.
13. A processor of a thirteenth aspect of the present invention has a structure wherein an instruction code is divided into an arbitrary size to be supplied to operation means a plurality of times through an operation bus when an original size of the instruction code is larger than that of an operation data bus.
   According to the structure, because the utilization of the existing operation means is realized by providing a data path, the detection of a defect can be performed in the structure having little additional hardware.
14. A processor of a fourteenth aspect of the present invention has a structure wherein operation means includes a memory space, in which the operation means takes a result of a checksum operation and stores the result on the occasion of loading at the time of starting as an expected value, and a defect of a data stored in memory means or instruction memory means is detected by the comparison of a result of a checksum operation during the operation of the processor with the expected value.
   According to the structure, because the utilization of the existing operation means is realized by providing a data path, the detection of the defect can be performed in the structure having little additional hardware.
15. A processor of a fifteenth aspect of the present invention has a structure wherein an operation means adds one more operation to operations to an object space in a checksum operation, and a data for the checksum operation is previously inserted into a data to be loaded in each operation space so that a result of the checksum operation takes a unique expected value, and then a defect of a data stored in memory means or instruction memory means is detected by comparing the unique expected value and the result of the checksum operation.
   According to the structure, in its detection function, because checksum operation codes are previously embedded in data to be loaded, a defect of data can easily be detected by performing one more checksum operation and no additional instruction is needed.
16. A digital signal processing apparatus of a sixteenth aspect of the present invention has a structure equipped with a processor of any of the first to the fifteenth aspects.
   According to the structure, operations and effects similar to those of any of the first to the fifteenth aspects can be obtained in the digital signal processing apparatus.
17. An operation apparatus of a seventeenth aspect of the present invention has a structure equipped with a processor according to any one of the first to the fifteenth aspects, means for downloading a necessary data to the processor at the time of starting, means for detecting a defect of a data stored in the processor by utilizing spare time during the operation of the processor, and means for performing re-downloading to the processor in which the defect has occurred when the defect is detected.
   According to the structure, in an operation apparatus, operations and effects similar to those of any of the first to the fifteenth aspects can be obtained, and re-downloading to the processor in which a defect has occurred can be performed.
18. An operation apparatus of an eighteenth aspect of the present invention has a structure equipped with a processor of any of the first to the fifteenth aspects, means for downloading a necessary data to the processor at the time of starting, means for detecting a defect of a data stored in the processor by utilizing spare time during the operation of the processor, and means for performing re-downloading only to a defective space of the processor in which the defect has occurred when the defect is detected.
   According to the structure, in an operation apparatus, operations and effects similar to those of any of the first to the fifteenth aspects can be obtained, and re-downloading only to a defective space of the processor in which a defect has occurred can be performed.
19. An operation apparatus of a nineteenth aspect of the present invention has a structure equipped with the digital signal processing apparatus of the sixteenth aspect, means for downloading a necessary data to the digital signal processing apparatus at the time of starting, means for detecting a defect of a data stored in the digital signal processing apparatus by utilizing spare time during the operation of the digital signal processor, and means for performing re-downloading to the digital signal processing apparatus in which the defect has occurred when the defect is detected.
   According to the structure, in an operation apparatus, operations and effects similar to those of the sixteenth aspect can be obtained, and re-downloading to the digital signal processing apparatus in which a defect has occurred can be performed.
20. An operation apparatus of a twentieth aspect of the present invention has a structure equipped with the digital signal processing apparatus of the sixteenth aspect, means for downloading a necessary data to the digital signal processing apparatus at the time of starting, means for detecting a defect of a data stored in the digital signal processing apparatus by utilizing spare time during the operation of the digital signal processing apparatus, and means for performing re-downloading only to a defective space of the digital signal processing apparatus in which the defect has occurred when the defect is detected.
   According to the structure, in an operation apparatus, operations and effects similar to those of the sixteenth aspect can be obtained, and re-downloading only to a defective space of the digital signal processing apparatus in which a defect has occurred can be performed.
21. A communication terminal of a twenty-first aspect of the present invention has a structure of being equipped with any one of a processor as in any one of the first to the fifteenth aspects, the digital signal processing apparatus as in the sixteenth aspect and an operation apparatus as in any one of the seventeenth to the twentieth aspects.
   According to the structure, in a communication terminal, operations and effects similar to those of any of the first to the twentieth aspects can be obtained.
22. A base station apparatus of a twenty-second aspect of the present invention has a structure of being equipped with any one of a processor as in any one of the first to the fifteenth aspects, the digital signal processing apparatus as in the sixteenth aspect and an operation apparatus as in any one of the seventeenth to the twentieth aspects.
   According to the structure, in a base station, operations and effects similar to those of any of the first to the twentieth aspects can be obtained.

This application is based on the Japanese Patent Application No. HEI 11-114689 filed on April 22, 1999, entire content of which is expressly incorporated by reference herein.

### Industrial Applicability

The present invention is suitable for utilizing in a processor field, in particular, a field capable of loading an instruction code or a data code at the time of its starting.

## Claims

1. A processor comprising:
memory means for storing a checksum operation instruction of a data in an arbitrary memory space;
controlling means for loading a data from an external device into the memory means at a time of starting;
checksum operation means for performing the checksum operation of the data stored at the loading in conformity with the checksum operation instruction, and
operation means for detecting a defect of the stored data on a basis of a result of the checksum operation.

2. The processor according to claim 1, wherein said memory means is instruction memory means for storing an instruction code.

3. The processor according to claim 1 or 2, wherein designation of an arbitrary memory space, in which said checksum operation is performed, is performed by designating a number of words of an object of said checksum operation in conformity with said instruction code directly.

4. The processor according to claim 1 or 2, wherein designation of an arbitrary memory space, in which said checksum operation is performed, is performed by designating a number of words of an object of said checksum operation by means of an arbitrary register indirectly.

5. The processor according to claim 1 or 2, wherein designation of an arbitrary memory space, in which said checksum operation is performed, is performed by designating a first address of an object space of said checksum operation by means of an instruction code directly.

6. The processor according to claim 1 or 2, wherein designation of an arbitrary memory space, in which said checksum operation is performed, is performed by designating a first address of an object space of said checksum operation by means of an arbitrary register indirectly.

7. The processor according to claim 1 or 2, wherein designation of an arbitrary memory space, in which a checksum operation is performed, is performed by designating an address interval of an object space of said checksum operation by means of an instruction code directly.

8. The processor according to claim 1 or 2, wherein designation of an arbitrary memory space, in which said checksum operation is performed, is performed by designating an address interval of an object space of said checksum operation by means of an arbitrary register indirectly.

9. The processor according to any one of claims 2-8, wherein said checksum operation means is connected with an instruction data bus connected with said instruction memory means.

10. The processor according to any one of claims 2-8, wherein said checksum operation means is connected with said instruction memory means, an instruction data bus connected with instruction decoding means for supplying an instruction signal to the instruction memory means, and the instruction decoding means.

11. The processor according to any one of claims 2-8, wherein said operation means performs said checksum operation in place of said checksum operation means by taking in said instruction code and said data in said instruction memory means from an operation data bus through an instruction data bus and instruction decoding means.

12. The processor according to any one of claims 2-8, wherein said checksum operation means is connected with said instruction memory means, an instruction data bus and an operation data bus, both of which are connected with instruction decoding means for supplying an instruction signal to said instruction memory means, and the instruction decoding means.

13. The processor according to claim 11 or 12, wherein said instruction code is divided into an arbitrary size to be supplied to said operation means a plurality of times through said operation data bus when an original size of said instruction code is larger than that of said operation data bus.

14. The processor according to any one of claims 1-13, wherein said operation means includes a memory space, in which said operation means takes a result of a checksum operation and stores the result on an occasion of loading at a time of starting as an expected value, and said defect of said data stored in said memory means or said instruction memory means is detected by a comparison of another result of another checksum operation during an operation of said processor with the expected value.

15. The processor according to any one of claims 1-13, wherein said operation means adds one more operation to operations to said object space in said checksum operation, and a data for said checksum operation is previously inserted into said data to be loaded in each operation space so that a result of said checksum operation takes a unique expected value, and then said defect of said data stored in said memory means or said instruction memory means is detected by comparing the unique expected value and the result of said checksum operation.

16. A digital signal processing apparatus comprising a processor according to any one of claims 1-15.

17. An operation apparatus comprising:
a processor according to any one of claims 1-15;
means for downloading a necessary data to said processor at a time of starting;
means for detecting a defect of a data stored in said processor by utilizing spare time during an operation of said processor, and
means for performing re-downloading to said processor in which the defect has occurred when the defect is detected.

18. An operation apparatus comprising:
a processor according to any one of claim 1-15;
means for downloading a necessary data to said processor at a time of starting;
means for detecting a defect of a data stored in said processor by utilizing spare time during an operation of the processor, and
means for performing re-downloading only to a defective space of said processor in which the defect has occurred when the defect is detected.

19. An operation apparatus comprising:
a digital signal processing apparatus according to claim 16;
means for downloading a necessary data to said digital signal processing apparatus at a time of starting;
means for detecting a defect of a data stored in said digital signal processing apparatus by utilizing spare time during an operation of said digital processing apparatus, and
means for performing re-downloading to said digital signal processing apparatus in which the defect has occurred when the defect is detected.

20. An operation apparatus comprising:
a digital signal processing apparatus according to claim 16;
means for downloading a necessary data to said digital signal processing apparatus at a time of starting;
means for detecting a defect of a data stored in the digital signal processing apparatus by utilizing spare time during an operation of said digital signal processing apparatus, and
means for performing re-downloading only to a defective space of said digital signal processing apparatus in which the defect has occurred when the defect is detected.

21. A communication terminal comprising any one of a processor according to any one of claims 1-15, a digital signal processing apparatus according to claim 16 and an operation apparatus according to any one of claims 17-20.

22. A base station apparatus comprising any one of a processor according to any one of claims 1-15, a digital signal processing apparatus according to claim 16 and an operation apparatus according to any one of claims 17-20.
